# FASCICULE DE BREVET EUROPEEN

(11) **EP 4 380 496 B1**
(45) Date de publication et mention de la délivrance du brevet: **07.05.2025**
(21) Numéro de dépôt: 22754862.5
(22) Date de dépôt: 25.07.2022
(51) Int. Cl.: A61C 7/08, A61C 7/14, A61C 13/00, A61C 7/10

(54) **APPAREIL DENTAIRE AMOVIBLE**
ABNEHMBARE ZAHNÄRZTLICHE VORRICHTUNG
REMOVABLE DENTAL APPLIANCE

(30) Priorité: 06.08.2021 FR 2108548
(43) Date de publication de la demande: 12.06.2024
(73) Titulaire: Valere, Frédéric, 18039 Ventimiglia (IT)
(72) Inventeur: Valere, Frédéric, 18039 Ventimiglia (IT)
(74) Mandataire: Roman, Alexis
(86) Numéro de dépôt international: PCT/EP2022/070750
(87) Numéro de publication internationale: WO 2023/011955

(56) Documents cités:
- US-A1- 2012 270 174
- US-B2- 8 651 860

## Description

### Domaine technique.

**L'invention concerne un** appareil dentaire amovible **et plus particulièrement d'un** aligneur dentaire défini comme un « aligneur lingual ».

Le domaine technique de **l'invention** est celui des aligneurs orthodontiques visant **à repositionner des dents d'un patient dans un but fonctionnel et/ou esthétique.**

### État de la technique.

Les appareils dentaires utilisés en orthodontie sont variés suivant le traitement à réaliser sur le patient. On connaît par exemple des appareils dentaires, tels que les bagues ou les arcs de travail. Des bagues ou des connecteurs sont fixés sur les dents et reliés par un fil ou par un arc de travail orthodontique. Le déplacement des dents est dès lors permis grâce à une force exercée sur les **dents par l'intermédiaire** du fil ou **de l'arc.**

**Un exemple d'un tel arc de trava** il est décrit dans la demande de brevet publiée US 2012/270174 A1. Cet arc de travail orthodontique est destiné à déplacer au moins une dent à traiter de l'arc dentaire d'un patient depuis une première configuration spatiale vers une deuxième configuration spatiale. Cet arc de travail comprend un élément de liaison avec la dent à traiter, destiné à être fixé sur ladite dent. L'arc de travail est rigide, et l'élément de liaison est mobile par rapport à l'arc de travail. L'élément de liaison est relié **à l'arc** de travail par des moyens de liaison déformables élastiquement. Ainsi, **l'élément de liaison** est en deux parties, une première partie fixée sur la dent, et une deuxième partie reliée **à l'arc de travail** par les moyens de liaison. **La conception d'un tel arc de travail** est donc complexe. De plus, cet arc de travail présente une structure rigide, pouvant être inconfortable pour le patient, et qui nécessite **d'être** contrôler régulièrement par un praticien. Il ne peut pas être démonté par le patient puisque le déclipsage manuel **de l'élément de liaison n'est pas permis.**

On connait en outre les aligneurs dentaires tels que les gouttières en plastique transparent conçues pour ne pas employer des fils ou autres accessoires métalliques utilisés dans les appareils fixes classiques. Ces gouttières présentent une cavité de réception qui s'adapte étroitement aux dents. Elles permettent **d'appliquer des forces** de traitement sur les dents pour les déplacer progressivement vers une position souhaitée. De telles gouttières sont par exemple commercialisées par la société Align Technology sous la marque Invisalign^{®}.

Les dents sont déplacées progressivement **d'une** position initiale **jusqu'à** une position finale souhaitée en utilisant une série de gouttières successives. La cavité de réception de chaque gouttière présente une géométrie correspondant à un agencement dentaire intermédiaire ou final. Les gouttières sont conformées au début du traitement et le patient porte chaque gouttière jusqu'à ce que la pression sur les dents ne soit plus ressentie. Le patient remplace alors la gouttière par la gouttière suivante de la série jusqu'à ce qu'il ne reste plus de gouttière. De manière pratique, les gouttières ne sont généralement pas fixées aux dents de sorte que le patient peut les mettre ou les enlever à tout moment pendant le traitement.

Ces gouttières présentent plusieurs inconvénients. Notamment, la fumée de tabac et/ou le café les jaunissent **de sorte qu'elles** deviennent inesthétiques au **bout d'un certain temps.** De plus, le patient est **obligé d'enlever** sa gouttière pour manger. Également, les gouttières doivent être portées par les patients en moyenne 20 heures par jour, pendant plusieurs mois de traitement.

En outre, une gouttière seule peut difficilement permettre de déplacer les dents selon les trois ordres de déplacement dentaire à savoir : la version (tipping), **l'égression, l'ingression,** la rotation, le torque et la translation. Aussi, dans certains cas, il est souhaitable, voire nécessaire, de prévoir des connecteurs (ou taquets) qui se fixent sur les dents pour créer des po**ints d'ancrage** et sur **lesquels s'engage de manière démontable l'aligneur. Les connecteurs et l'aligneur coopèrent de façon à appliquer une contr**ainte (force et/ou couple) sur les dents, laquelle contrainte ne serait pas possible en l'absence de connecteur. Les connecteurs sont toutefois habituellement fixés sur la face vestibulaire des **dents de sorte qu'ils sont visibles et** particulièrement peu esthétiques. Ils peuvent **également être une source d'inconfort et/ou d'irritation au niveau des lèvres et/ou** des joues du patient.

L'**invention vise à résoudre tout ou partie des problèmes précités.** Aussi, un **objectif de l'invention est de proposer un appareil dentaire dont l'aligneur ne** devient pas inesthétique pour le patient qui le porte.

**Un autre objectif de l'invention est de proposer un appareil dentaire dont l'aligneur n'a pas besoin d'être retiré par le patient** lorsque celui-ci mange.

Un **objectif supplémentaire de l**'invention est de proposer un appareil dentaire capable **d'assurer un contrôle** tridimensionnel précis des dents.

Encore un **autre objectif de l'invention est de proposer un appareil dentaire** qui soit particulièrement esthétique, hygiénique et confortable pour le patient.

### Présentation de l'invention.

**La solution proposée par l'invention est** un appareil dentaire défini selon la revendication 1.

Des modes de réalisation préférés sont définis par les revendications dépendantes.

Cet appareil est remarquable en ce que l'**aligneur dentaire est formé d**'une bande flexible profilée pour recouvrir la seule face linguale des dents en laissant libre les autres faces desdites dents. De plus, les connecteurs sont configurés pour se fixer contre la face linguale des dents. Et la bande flexible comprend des **réservations dans lesquelles s'emboîtent** les connecteurs de manière élastique et démontable manuellement.

**L'aligneur n'étant qu'en position linguale** (« aligneur lingual »), il est constamment invisible et de fait particulièrement esthétique. **Même s'il venait à** se décolorer au contact de la fumée de cigarette ou de café, il ne devient pas inesthétique. **De plus, l'aligneur et les connecteurs laissant totalement libre la** face occlusale et incisale des dents, le patient peut parfaitement couper, mastiquer et manger sans avoir à retirer ledit aligneur. En outre, la coopération **entre l'aligneur et les** connecteurs permet **d'assurer un contrôle tridimensionnel** très précis des dents. Et de par leur position linguale, les connecteurs ne sont **plus une source d'inconfort et/ou d'irritation au niveau des lèvres et/ou des joues** du patient. **Enfin**, **l'aligneur peut** être facilement retiré et remplacé par le patient lui-même, sans avoir recours à un praticien.

**D'autres caractéristiques avantageuses de l'invention sont listées ci**-dessous. Chacune de ces caractéristiques peut être considérée seule ou en combinaison avec les caractéristiques remarquables définies ci-**dessus, et faire l'objet, le cas échéant, d'une ou plusieurs demandes de brevet divisionnaires :**
- Selon l'invention, les réservations sont conformées dans la bande flexible de sorte que lesdites réservations et ladite bande ne présentent pas de mouvement relatif entre eux. Par « mouvements relatifs », on entend un déplacement des réservations par rapport à la bande flexible. Plus spécifiquement, **l'absence de mouvement relatif** entre la bande flexible et les réservations signifie que les réservations de la bande flexible ne se déplacent pas par rapport à ladite bande, notamment lorsque les réservations sont emboîtées sur les connecteurs.
- Selon un mode de réalisation, chaque connecteur comporte : - une embase présentant une face de fixation adaptée pour se fixer contre la **face linguale d'une dent ;** - une tête de connexion dans le prolongement **de l'embase et dans laquelle s'emboîte une des réservations de l'aligneur dentaire.**
- Selon un mode de réalisation : - la tête de connexion a une forme **d'ovoïde ou d'ellipsoïde présentant un axe de symétrie longitudinal ;** - **l'axe de symétrie longitudinal et la normale à la face de fixation de l'embase, forment un angle compris entre 10° et 90°,** avantageusement entre 45° et 90° et préférentiellement entre 55° et 65°.
- Selon un mode de réalisation, la tête de connexion **en forme d'ovoïde** présente une première extrémité et une seconde extrémité opposées, ladite première extrémité étant plus aiguë que ladite seconde extrémité, laquelle première extrémité est, en usage, dirigée vers la racine de la dent sur laquelle le connecteur est fixé.
- Selon un mode de réalisation, la tête de connexion est distante de **l'embase, une collerette reliant ladite embase d**e ladite tête.
- Selon un mode de réalisation, chaque connecteur comporte : - une tête **de connexion dans laquelle s'emboîte une des réservations de l'aligneur ;** - une face de fixation adaptée pour se fixer contre la face **linguale d'une dent ;** - la face de fixation consiste en un méplat aménagé sur la tête de connexion.
- Selon un mode de réalisation, **l'aligneur présente une extension palatine** configurée pour, en usage, venir en appui contre tout ou partie de la voute palatine du patient lorsque ledit aligneur est positionné au niveau **de l'arcade dentaire maxillaire dudit patient.**
- Selon un mode de réalisation, **l'aligneur présente une extension** gingivale configurée pour, en usage, venir en appui contre une zone gingivale du patient lorsque ledit aligneur est positionné au niveau de **l'arcade dentaire mandibulaire dudit patient.**
- **Selon un mode de réalisation, l'appareil comporte** en outre une gouttière flexible et amovible, profilée pour, en usage, recouvrir des dents du patient, laquelle gouttière présente une portion **s'engageant sur au moins une partie de l'aligneur de façon à appliquer sur ledit aligneur au moins** une force tendant à le contraindre vers la face linguale des dents à déplacer.
- **Selon un mode de réalisation, l'appareil comporte** en outre une gouttière flexible et amovible, profilée pour, en usage, recouvrir des dents du patient, laquelle gouttière présente une portion complémentaire de **l'aligneur** de sorte que, en usage, les dents avec lesquelles coopèrent ledit aligneur aient : - la majeure partie de leur face linguale recouverte par ledit aligneur ; - **l'autre partie de leur face linguale, leur face** occlusale/incisale et leur face vestibulaire recouvertes par ladite gouttière.
- Selon un mode de réalisation, **l'aligneur** est réalisé dans un matériau présentant un **module d'élasticité longitudinale inférieur à 1000MPa** selon la norme DIN EN ISO 527-2. Avantageusement, le module **d'élasticité longitudinale** (module de traction, ou module de Young) est inférieur ou égal à 850 MPa, préférentiellement compris entre 100 MPa et 850 MPa. **Ce module d'élasticité est particulièrement adapté pour** un aligneur en polyuréthane ou en polyéthylène téréphtalate glycol (dont **l'abréviation est** « PETG »).
- **Selon un mode de réalisation, l'aligneur est en polyuréthane** thermoformable.
- Selon un mode de réalisation, **l'aligneur présente des portions ou zones** présentant des modules d'élasticité distincts.

Un autre aspect non couvert par la présente invention concerne un appareil **d'expansion maxillaire** comprenant : - une **plaque d'expansion** maxillaire configurée pour coopérer avec une pluralité de dents de l'arcade dentaire maxillaire **d'un patient de manière à** élargir le palais dudit patient ; - des **connecteurs adaptés pour se fixer sur lesdites dents et sur lesquels s'engage de** manière démontable la **plaque d'expansion maxillaire** ; - les connecteurs et la plaque coopèrent de façon à appliquer au moins une contrainte sur tendant à élargir le palais **lorsque l'appareil dentaire est porté par le** patient ; - la plaque **d'expansion maxillaire** est profilée pour recouvrir la voute palatine et la seule face linguale des dents en laissant libres les autres faces desdites dents ; - les connecteurs sont configurés pour se fixer contre la face linguale des dents ; - la plaque **d'expansion maxillaire** comprend des réservations dans lesquelles **s'emboîtent de manière élastique les connecteurs.**

Encore un autre aspect non couvert par la présente invention concerne un dispositif de support de prothèse dentaire comprenant : - une bande support **solidaire d'une prothèse** dentaire provisoire ; - des connecteurs adaptés pour, en usage, se fixer sur des dents du patient qui encadre un espace dentaire libre et **sur lesquels s'engage de manière démontable la** bande support de sorte que la prothèse dentaire provisoire vienne combler ledit espace ; - la bande support est profilée pour recouvrir la seule face linguale des dents en laissant libre les autres faces desdites dents ; - les connecteurs sont configurés pour se fixer contre la face linguale des dents ; - la bande support comprend des réservations dans

### lesquelles s'emboîtent de manière élastique les connecteurs.

### Brève description des figures.

**D'autres avantages et caractéristiques de l'invention apparaîtront mieux à la lecture de la description d'un mode de réalisation préféré** qui va suivre, en **référence aux dessins annexés, réalisés à titre d'exemples indicatifs et** non limitatifs et sur lesquels :
- [Fig. 1] **est une vue schématique en coupe transversale d'un appareil dentaire selon l'invention, porté par un patient.**
- [Fig. 2a] **est une vue schématique en coupe transversale d'un aligneur dentaire selon l'invention,** adapté pour se positionner **au niveau de l'arcade** dentaire maxillaire **d'un** patient.
- **[****Fig. 2b****] est une vue schématique en coupe transversale d'un aligneur** dentaire selon **l'invention, adapté pour se positionner au niveau de l'arcade dentaire mandibulaire d'un patient.**
- [Fig. 3a], [Fig. 3b] et [Fig. 3c] schématisent respectivement une vue schématique de face, une vue de profil et une vue de dessus d'un connecteur utilisé dans **l'invention.**
- [Fig. 4a], [Fig. 4b] et [Fig. 4c] schématisent respectivement une vue **schématique de face, une vue de profil et une vue de dessus d'un connecteur utilisé dans l'invention, et sur lequel sont schématisé différentes zones de** contrainte.
- [Fig. 5] **illustre la mise en place d'un appareil dentaire selon l'invention** au **niveau de l'arcade dentaire mandibulaire et de l'arcade dentaire maxillaire d'un** patient.
- [Fig. 6] **est une vue schématique en coupe transversale d'un appareil dentaire selon l'invention, porté par un patient, l'aligneur disposé au niveau de l'arcade** dentaire maxillaire présentant une extension palatine en prise avec une vis **d'ancrage.**
- [Fig. 7] est une vue **schématique en coupe transversale d'un aligneur dentaire utilisé dans l'appareil de la** **figure** 6.
- [Fig. 8] **est une vue schématique en coupe transversale d'un appareil dentaire selon un autre mode de réalisation de l'invention, disposé au niveau de l'arca**de **dentaire mandibulaire d'un patient.**
- [Fig. 9] **est une vue schématique en coupe transversale d'une** gouttière amovible utilisée dans l'appareil de la figure 8.
- [Fig. 10] illustre la mise en place d'un appareil dentaire selon un autre mode de réalisation non couvert par l'invention, au niveau de l'arcade dentaire maxillaire d'un patient.
- [Fig. 11] est une vue schématique en coupe selon A-A de la figure 10.
- [Fig. 12a] et [Fig. 12b] illustrent l'utilisation d'un appareil dentaire comme support de dent provisoire. Un tel appareil dentaire n'étant pas couvert par l'invention.
- [Fig. 13a] et [Fig. 13b] sont des vues schématiques, respectivement de profil et de dessus, **d'un connecteur selon une variante de** réalisation non couverte pas l'invention.
- **[****Fig. 14****] est une vue schématique en coupe transversale d'un appareil** dentaire selon un autre mode de réalisation **non** couvert par **l'invention, disposé au niveau de l'arcade dentaire mandibulaire d'un patient.**

### Description des modes de réalisation.

Par souci de clarté, les précisions suivantes sont apportées à certains termes utilisés dans la description et les revendications :
- « Face linguale » signifie la face dentaire orientée vers la langue (pour les **dents de l'arcade mandibulaire) ou orientée vers le palais (pour les dents de l'arcade maxillaire).**
- **Tel qu'utilisé ici, sauf indication contraire, l'utilisation des adjectifs ordinaux «** premier », « deuxième », etc., pour décrire un objet indique simplement que **différentes occurrences d'objets similaires sont mentionnées et n'implique pas** que les objets ainsi décrits doivent être dans une séquence donnée, que ce soit dans le temps, dans l'espace, dans un classement ou de toute autre manière.
- **De même, l'utilisation des adjectifs «** droite/gauche », « devant/derrière » « haut/bas », etc, **permet de décrire simplement la position d'un objet dans la configuration des figures annexées, mais n'implique pas nécessairement qu'en** pratique, des objets similaires soient dans la même position.
   - « X et/ou Y » signifie : X seul, ou Y seul, ou X et Y.
   - D'une manière générale, on appréciera que les différents dessins ne sont pas dessinés à l'échelle d'une figure à l'autre ni à l'intérieur d'une figure donnée, et notamment que les objets peuvent être arbitrairement dessinés pour faciliter la lecture des dessins.

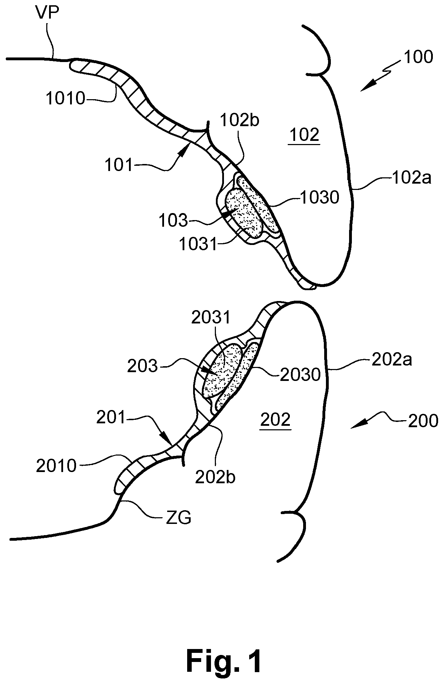

La figure 1 illustre un premier aligneur dentaire 101 qui coopère avec une **première dent 102 d'une** arcade dentaire maxillaire 100 et un deuxième aligneur dentaire 201 qui coopère avec **une deuxième dent 202** d'une arcade dentaire mandibulaire 200. En pratique, chaque aligneur 101, 201 coopère avec une pluralité de dents, par exemple entre 2 et 16 dents. Selon la nature du traitement, seule une des deux arcades 100 ou 200 peut être équipée **d'un aligneur. L'aligneur** 101, 201 peut être utilisé pour déplacer une seule dent ou une pluralité **de dents d'une arcade dentaire.**

Les dents 102, 202 présentent une face vestibulaire 102a, 202a (orientée vers la joue ou la lèvre), une face linguale 102b, 202b, une face occlusale ou incisale **(dessus), une face mésiale (vers l'avant) et une face distale (vers l'arrière). Selon une caractéristique de l'invention, l**'aligneur 101, 201 est formé **d'une bande flexible profilée pour recouvrir** les seules faces linguales 102b, 202b des dents. Toutes les autres faces des dents 102, 202 sont laissées libres, notamment les faces occlusales ou incisales, ce qui permet au patient de pouvoir **manger en gardant l'aligneur** 101, 201 en bouche.

Selon un mode de réalisation, cette bande flexible recouvre et est en contact avec la totalité des faces linguales 102b, 202b (sauf au niveau des connecteurs 103, 203) de sorte que des aliments ne peuvent **pas venir s'insérer entre.** Selon l'invention, cette bande flexible ne recouvre et **n'est** en contact qu'avec une partie seulement des faces linguales 102b, 202b, par exemple qu'avec la partie située entre le connecteur 103, 203 et la face occlusale ou incisale.

Selon un mode préféré de réalisation, **l'aligneur** 101, 201 est réalisé **d'un seul** tenant. Il peut toutefois être formé de plusieurs portions distinctes, chaque portion étant **utilisée pour traiter spécifiquement le déplacement d'une ou plusieurs** dents.

**L'aligneur** 101, 201 est avantageusement réalisé dans un matériau polymère transparent ou translucide de sorte qu'il **n'est pas visible lorsqu'il** est porté. Le matériau polymère utilisé peut par exemple appartenir à la famille suivante : polymère (méth)acrylate ; silicone ; polyester ; polyuréthane ; polycarbonate ; polyéthylène téréphtalate glycol (PETG) ; polypropylène ; éthylène-acétate de vinyle ; ou tout autre polymère approprié.

Selon un mode de réalisation préféré, **l'aligneur est en polyuréthane** thermoformable. Avantageusement, le polyuréthane est sous la **forme d'une** feuille. **Alternativement, l'aligneur peut être réalisé en** polyéthylène téréphtalate glycol **(dont l'abréviation** est « PETG » ou « PET-G »).

**Selon un mode de réalisation, l'aligneur** 101, 201 est obtenu par moulage, **thermoformage, impression 3D ou tout autre procédé convenant à l'homme du** métier. Plus préférentiellement, le mode de production préféré est le thermoformage.

**D'une manière connue de l'homme du métier, la détermination des** mouvements dentaires **par l'aligneur** 101, 201 peut commencer par une modélisation de la position initiale des dents, par exemple à l'aide **d'une prise d'empreinte, ou préférentiel**lement d'un scan intra-oral **permettant d'obtenir une** modélisation numérique des arcades dentaires. Le plan de traitement définissant la séquence de déplacements dentaires **jusqu'à une position finale souhaitée** peut être déterminée par le praticien et/ou par un logiciel dédié du type le logiciel DeltaFace^{®} commercialisé par la société Coruo. Cette séquence va déterminer la configuration des aligneurs à chaque étape du plan de traitement. À chaque étape, les dents sont déplacées progressivement, par exemple de 0,1 mm à 0,2 mm **dans différents plans de l'espace.** Il peut y avoir entre 10 et 100 étapes et donc entre 10 et 100 **modèles différents d'aligneurs.** Au début de chaque étape **du traitement, lorsqu'il est placé sur les dents, l'aligneur est ajusté à l'alig**nement intermédiaire (ou final) que les dents doivent avoir à la fin de ladite étape, de **sorte que chaque modèle d'aligneur exerce une ou plusieurs contraintes sur** lesdites dents à déplacer. **La flexibilité de l'aligneur lui** permet de se déformer élastiquement jusqu'à **l'alignement** que la dent a **au début l'étape du traitement.** En essayant de revenir à sa forme **initiale (mémoire de forme), l'aligneur** exerce une ou plusieurs contraintes sur les dents. Les dents s'ajustent alors progressivement à la forme de l'aligneur. Lorsque les dents sont parfaitement **ajustées à la forme d'un aligneur, c'est-**à-dire lorsque les dents ont été déplacées **jusqu'à l'agencement prévu, la déformation de l'aligneur et donc la force de** traitement associée, deviens plus petite, **voire nulle. L'aligneur est alors** changé **pour passer à l'étape suivante du traitement.** En pratique, il est fourni au patient **un ensemble d'aligneurs, qu'il utilise séquentiellement à chaque étape du** traitement, sans avoir besoin de consulter un praticien. A la fin du traitement, le dernier aligneur (ou un autre aligneur ajusté à l'alignement final) peut être utilisé à des fins de contention, lequel aligneur est alors passif, **c'est-à-dire qu'il ne** contraint aucune dent.

**La flexibilité de l'aligneur** 101, 201 dépend principalement de sa forme, de son matériau et de son épaisseur. Cette flexibilité correspond à la capacité de **l'aligneur à se déformer de manière élastique et contrôlée, pour exercer une** contrainte de traitement sur une ou plusieurs dents afin de la(les) déplacer. Avantageusement, **la flexibilité de l'a**ligneur 101, 201 est déterminée par son module d'**élasticité** longitudinale (ou module de traction, encore appelé module de Young), établi selon la norme DIN EN ISO 527-2. Cette norme implique une **mesure du module d'élasticité longitudinale** par un test de traction. Dans le cas **d'un aligneur 101, 201 selon l'invention, le module d'élasticité est** avantageusement inférieur à 1000 MPa, avantageusement inférieur ou égal à 850 MPa et plus préférentiellement compris entre 100 MPa et 850 MPA.

Selon un mode de réalisation, **l'épaisseur de** l'aligneur 101, 201 est comprise entre 0,1 mm et 2 mm, avantageusement entre 0,5 mm et 1 mm, préférentiellement entre 0,6 mm et 0,8 mm. Cette épaisseur peut être constante ou au contraire variée **de manière à ce que l'aligneur 101, 201 présente** différentes portions ou zones **d'épaisseur distincte ayant des modules d'élasticité** différents. **On peut ainsi adapter l'intensité de la contrainte** qui sera appliquée sur telle ou telle dent à traiter. Un résultat similaire est obtenu en utilisant un aligneur **formé d'une pluralité de portions ou** de zones constituées de matériaux présentant des modules d'élasticité distincts. Chaque portion ou zone peut ainsi **générer une contrainte dont l'intensité lui est propre.**

**L'aligneur 101, 201 est maintenu en position au moyen de connecteurs 103,** 203 configurés pour se fixer contre la face linguale 102b, 202b des dents 102, 202. **L'aligneur 101, 201 s'engage de manière démontable** (manuellement et sans instrument) sur les connecteurs 103, 203 comme expliqué plus avant dans la description.

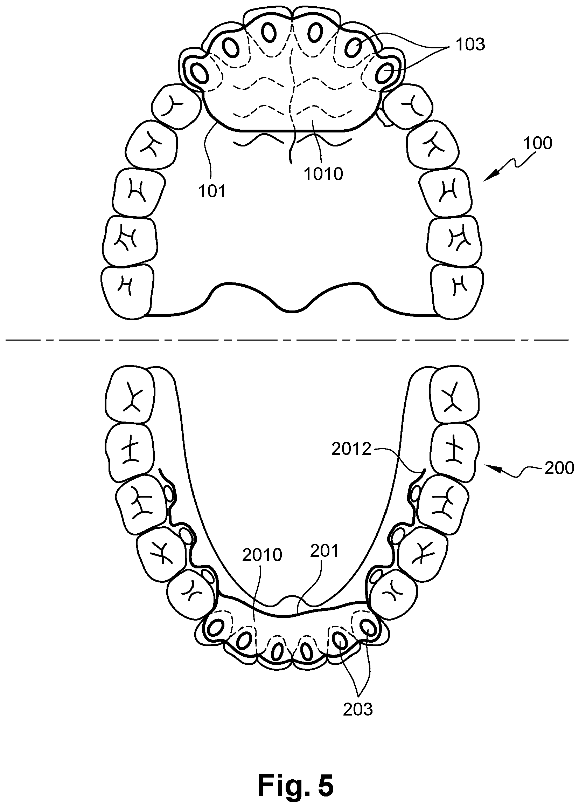

Les connecteurs 103 **peuvent être fixés sur tout ou partie des dents d'une** arcade dentaire. Sur **l'exemple de la** **figure 5****, au niveau de l'arcade** maxillaire 100, les connecteurs 103 sont fixés sur la face linguale des incisives centrales, des incisives latérales et des canines, **l'aligneur 101 étant positionné** uniquement au niveau de ces dents. Au niveau **de l'arcade 200, les connecteurs** 203 sont fixés sur la face linguale des incisives centrales, des incisives latérales, des canines, des premières prémolaires, des secondes prémolaires et des premières molaires, **l'aligneur 201 étant positionné uniquement** au niveau de ces dents.

Les connecteurs 103, 203 peuvent être réalisés dans le même matériau polymère que **l'aligneur** 101, 201, ou dans un matériau distinct, par exemple en métal ou en céramique. Les connecteurs 103, 203 peuvent être obtenus par moulage, usinage, impression 3D, etc. **Ils sont rigides, en ce sens qu'ils ne se déforment pas lorsqu'ils sont contraints par l'aligneur.**

Pour simplifier leur conception et leur mise en place, tous les connecteurs 103, 203 sont avantageusement identiques en taille et en forme, quel que soit la dent sur laquelle ils sont fixés et, quelle **que soit l'arcade dentaire où ils sont** positionnés. On peut toutefois prévoir des tailles et/ou des formes de connecteurs différentes selon **la dent et/ou selon l'arcade dentaire et/ou** selon le type de contrainte à appliquer **et/ou selon l'intensité de la contrainte à appliquer.**

**Selon un mode de réalisation, l'aligneur 101, 201 comprend un organe de** préhension permettant au patient de facilement le saisir pour le désengager des connecteurs 103, 203. Sur la figure 5, cet organe de préhension 2012 se **présente sous la forme d'une encoche conformée au niveau d'un** ou plusieurs rebords ou au niveau **de chaque (ou d'une seule) extrémité distale de l'aligneur** 201. Cette encoche 2012 permet **au patient d'y glisser un ongle ou un doigt pour désengager l'aligneur 201.** L'organe de préhension 2012 peut se présenter sous **une autre forme, par exemple sous la forme d'un élément en relief. L**'organe de préhension 2012 peut être conformé en même temps **que l'aligneur 101, 201 ou** être rapporté sur celui-ci.

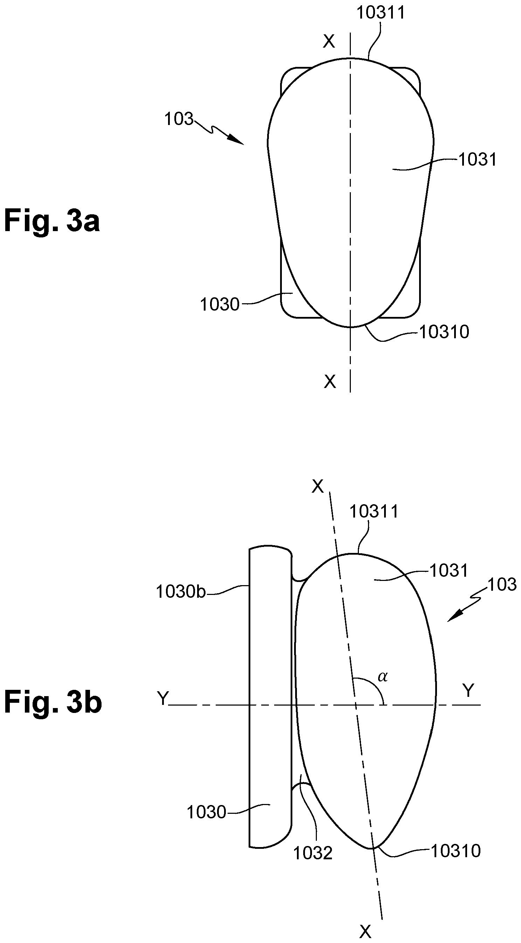

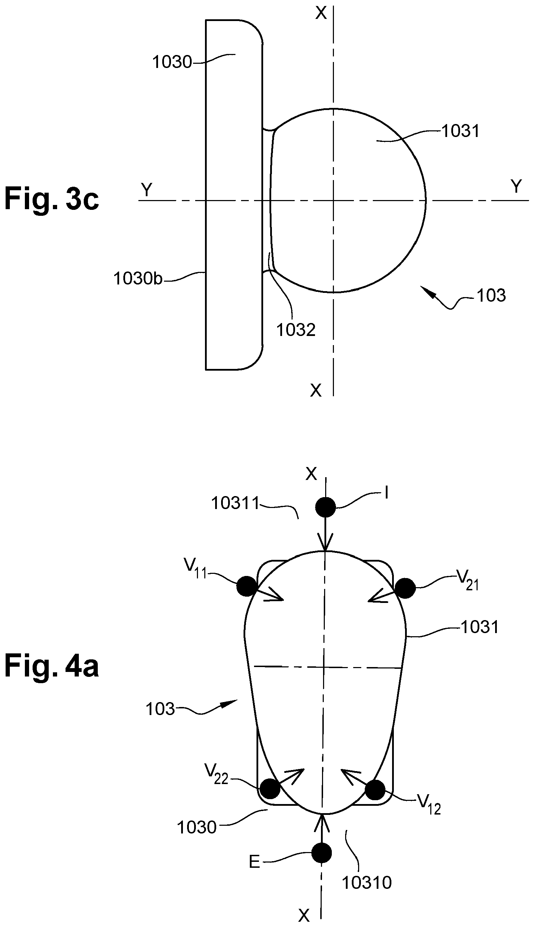

Les figures 3a, 3b et 3c illustrent un mode préféré **de réalisation d'un** connecteur 103 qui peut être utilisé de manière universelle, quelle que soit la **dent, quelle que soit l'arcade dentaire et quel** que soit le type **et/ou l'intensité** de contrainte à appliquer.

Ce connecteur 103 comprend une embase 1030 présentant une face de fixation 1030b adaptée pour se fixer contre la face linguale 102b, 202b d'une dent. Selon un mode de réalisation, **l'embase 1030 a une forme** rectangulaire ou sensiblement rectangulaire, dont la longueur est comprise entre 2 mm et 6 mm, **la largeur est comprise entre 1 mm et 3 mm et l'épaisseur comprise entre 0,5 mm et 2 mm. L'embase 1030 peut toutefois avoir d'autres** formes, par exemple une forme circulaire, ovale, polygonale, etc. La face de fixation 1030b peut être plane, mais présente préférentiellement une courbure adaptée à celle de la face linguale 102b, 202b. Selon un mode de réalisation, **la fixation de l'embase** 1030 sur la dent est réalisée par collage, **par exemple au moyen d'une colle** photo-polymérisable. La position des connecteurs 103, 203 est conservée pendant **toute la durée du traitement de sorte qu'il n'est pas besoin de les changer à** chaque étape.

Le connecteur 103 comprend également une tête de connexion 1301 qui est dans le prolongement de **l'embase** 1030. Sur les figures 3a, 3b et 3c, la tête de connexion 1301 est distante de **l'embase 1030, par exemple** éloignée de 0,5 mm à 2 mm, de sorte que le connecteur 103 présente une collerette 1032 reliant ladite embase de ladite tête. Cette collerette 1032 peut notamment permettre de recevoir une chainette ou un élastique **permettant d'appliquer une contrainte sur** le connecteur 103, lorsque ladite chainette ou ledit élastique est attaché à un **autre connecteur, à une vis d'ancrage ou à un bouton orthodontique.** Cette technique peut par exemple être utilisée pour tracter une dent incluse.

Sur les figures 3a, 3b et 3c, la tête de connexion 1031 a une forme d'ovoïde (ou **en goutte d'eau ou en forme d'œuf)** présentant un axe de symétrie longitudinal X-X, ou axe principal. À **titre d'exemple, cette ovoïde est incluse dans** une enveloppe parallélépipédique dont la longueur est comprise entre 2 mm et 6 mm, la largeur est comprise entre 1 mm et 6 mm et la profondeur comprise entre 1 mm et 6 mm.

En se rapportant à la figure 3b, **l'axe de symétrie longitudinal X-X** et la normale **Y-Y à la face de fixation 1030b de l'embase 1030, forment** avantageusement **un angle α compris entre 10° et 90°, avantageusement entre** 45° et 90° et préférentiellement entre 55° et 65°. Cette angulation de la tête de connexion 1031 ovoïde permet un contrôle très précis des déplacements dentaires, et plus particulièrement la version et le torque.

La tête de connexion 1031 ovoïde présente une extrémité 10310 qui est plus **aiguë que l'autre extrémité opposée 10311.** Pour contrôler les déplacements dentaires (notamment la version et le torque) avec une précision optimale, lorsque le connecteur 103 est fixé sur une dent, cette extrémité 10310 « en pointe » est préférentiellement dirigée vers la racine de ladite dent. De bons résultats peuvent toutefois être obtenus lorsque **l'extrém**ité en pointe 10310 est dirigée vers la face occlusale ou incisale de la dent. Pour des déplacements dentaires tels **qu'une** rotation, **l'extrémité en pointe 10310 peut être dirigée vers** la face distale ou mésiale de la dent.

Après de multiples expérimentations, **l'inventeur a constaté qu'un tel** connecteur 103, notamment avec une tête de connexion 1031 ovoïde, présentant **une angulation par rapport à l'embase** 1030 et dont **l'extrémité en pointe 10310** est dirigée vers la racine de la dent, permettait non seulement de déplacer les dents **selon n'importe quelle trajectoire choisie,** avec un contrôle très précis des déplacements dentaires selon les trois ordres, mais encore de régler avec **précision l'intensité des contraintes appliquées sur les dents.** Un tel connecteur **103 peut être qualifié d'universel dans la mesure où une seule** forme et une seule orientation permettent de contrôler avec précision les six mouvements dentaires (version ou tipping, égression, ingression, rotation, torque, translation).

De bons résultats en termes de précision des déplacements dentaires et de **réglage de l'intensité des contraintes,** sont également obtenus lorsque la tête de connexion 1031 a une **forme ellipsoïde allongée dont l'axe principal est l'axe de** symétrie longitudinal X-X précité. Les deux extrémités 10310 et 10311 sont dans ce cas identiques et symétriques.

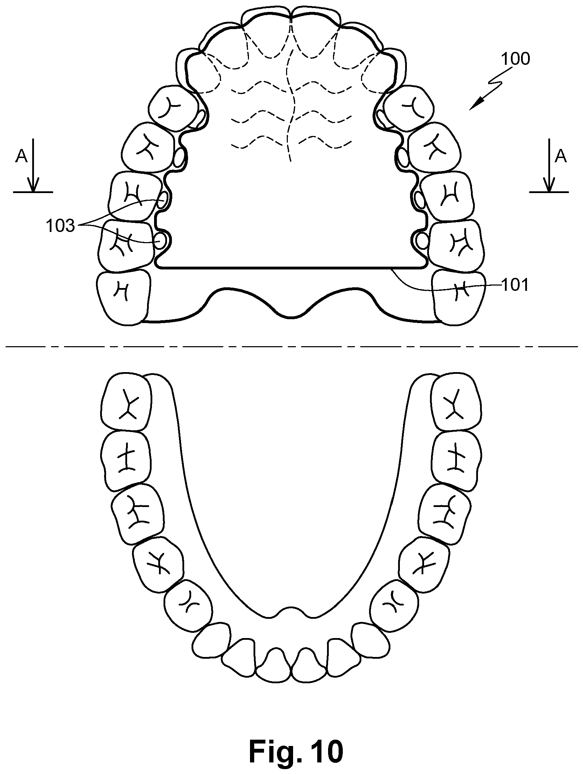

**Selon d'autres modes de réalisation** permettant **d'assurer un contrôle** tridimensionnel précis des dents, et/ou utiles notamment dans les applications décrites plus avant dans la description en référence aux figures 10, 11 et 12a-12b, la tête de connexion 1031 peut avoir une forme ovoïde ou ellipsoïde allongée ou une autre forme et notamment une forme de sphère, de cube, de parallélépipède, de polyèdre, de prisme, de cône, de pyramide, de cylindre, etc. Elle peut encore consister en une combinaison de deux ou plusieurs de ces différentes formes.

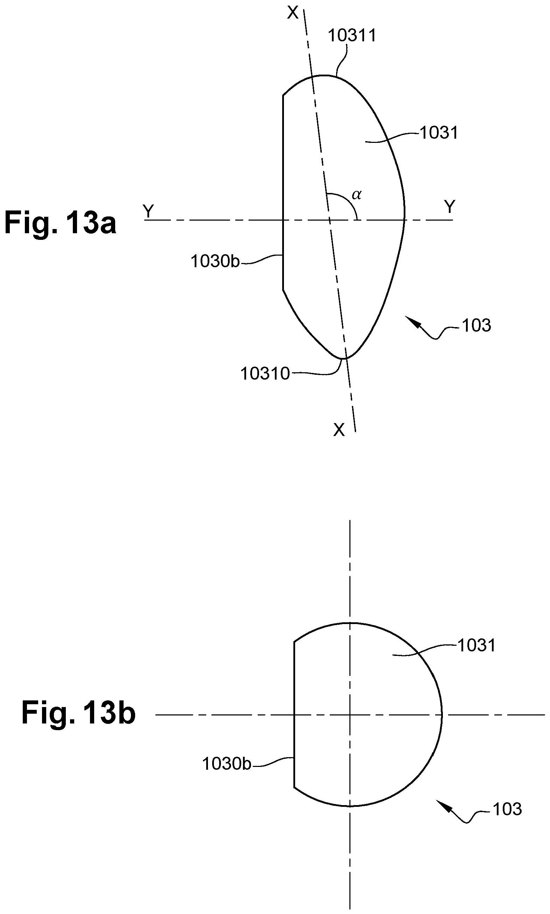

Dans la variante de réalisation des figures 13a et 13b, la face de fixation 1030b consiste en un méplat aménagé directement sur la tête de connexion 1031. Cette dernière est alors positionnée au plus près de la face linguale de la dent. Cette conception offre davantage de confort au patient dans la mesure où **l'encombrement** (notamment **l'épaisseur et/ou la hauteur)** du connecteur 103 est réduit en comparaison de celui des figures 3a, 3b et 3c. En outre, la tête de connexion 1031 étant moins en porte-à-faux en comparaison de celle des figures 3a, 3b et 3c, **l'intensité et/ou la nature** des contraintes appliquées sur la dent ne sont pas les mêmes.

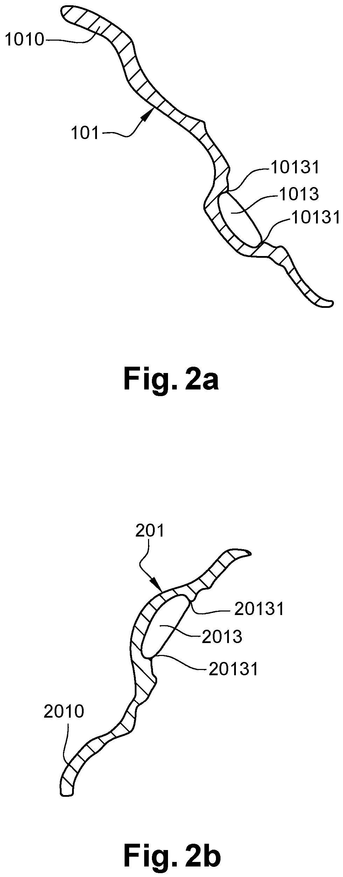

En se rapportant aux figures 1, 2a et 2b, chaque aligneur 101, 201 comprend des réservations 1013, 2013 **dans lesquelles s'emboîtent de manière élastique** les connecteurs 103, 203 et plus particulièrement les têtes 1031, 2031. Pour la **mise en place de l'aligneur 101, 201, il suffit d'amener les réservations 1013,** 2013 en vis-à-vis des têtes 1031, 2031 et de pousser manuellement (avec les doigts) lesdites réservations sur lesdites têtes. Les réservations 1013, 2013 forment des cavités (non débouchantes) dans lesquelles se logent les têtes 1031, 2031. Elles sont obtenues lors de la conformation de l'aligneur 101, 201. Ainsi, les réservations 1013, 2013 et la bande flexible **de l'aligneur 101, 201** ne présentent pas de mouvements relatifs entre eux, notamment lorsque les réservations 1013, 2013 sont emboîtées les connecteurs 103, 203, et contrairement à la solution décrite dans le document brevet US 2012/270174 A1 précité.

Selon un mode de réalisation, les réservations 1013, 2013 présentent une lèvre périphérique 10131, 20131 ou une autre forme en contre-dépouille qui se déforme lors de l'introduction et du retrait des connecteurs 103, 203. Après introduction des connecteurs 103, 203, la lèvre périphérique 10131, 20131 **s'accouple avec la tête 1031, 2031.** On note ici que des têtes 1031, 2031 en **forme d**'ovoïde ou **d'ellipsoïde** assurent un déboîtage manuel aisé et non douloureux **de** l'aligneur 101, 201, sans **risque d'arracher les connecteurs 103,** 203.

**L'aligneur 101, 201 se monte et se démonte manuellement, en ce sens qu'il** n'est **pas nécessaire d'utiliser d'outils spécifique. Le patient peut effectuer seul et** à la main **l'emboîtement et le démontage de l'aligneur 101, 201** sur les connecteurs 103, 203. A **titre d'exemple et** pour indiquer un ordre de grandeur, la force **permettant de retirer l'aligneur 101, 201 des** connecteurs 103, 203 est inférieure à 550 g (gramme), avantageusement comprise entre 50 g et 550 g, et **préférentiellement d'environ 350 g. Il est à noter qu'en usage, la salive et les** retraits**-enclenchements successifs de l'aligneur 101, 201 sur les connecteurs 103, 203 rendre la manoeuvre plus facile avec le temps, les réservations** 1013, 2013 pouvant notamment se déformer légèrement. De plus, la force de retrait diffère selon le nombre de connecteurs 103, 203 en prise avec **l'aligneur 101,** 201. Cette force peut par exemple être mesurée **à l'aide d'une** jauge de tension, **d'un dynamomètre,** ou **par toute méthode connue de l'homme du métier.**

Lorsque les réservations 1013, 2013 sont emboîtées dans les connecteurs 103, 203 **et que l'aligneur 101, 201 est en position, ledit aligneur vient exercer** une ou plusieurs contraintes sur les têtes 1031, 2031 et éventuellement sur la face linguale des dents. **C'est donc la flexibilité de l'aligneur 101, 201** qui permet **d'exercer ces contraintes sur les têtes 1031, 2031,** et non pas des moyens de liaison déformables élastiquement rajoutés dans les réservations comme préconisé par le document brevet US 2012/270174 A1 précité.

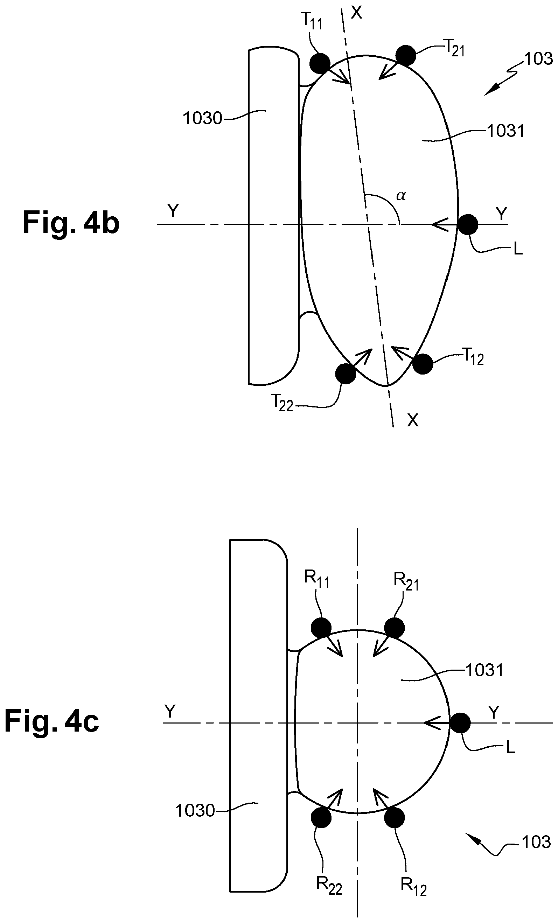

Les figures 4a, 4b et 4c illustrent différentes **zones de contrainte d'un** connecteur 103 schématisées par les points noirs. Ces zones de contrainte correspondent à des points ou des surfaces de la tête 1031 sur lesquels **l'aligneur** appuie et/ou exerce une pression. Ces pressions sont induites par la **déformation élastique de l'aligneur durant l'étape de** traitement concernée. En **d'autres termes, l'aligneur vient appuyer sur** une ou plusieurs zones localisées de la tête 1031. La localisation précise des zones de contraintes peut être déterminée par une configuration spécifique des réservations 1013, 2013 et/ou par la création de bossages conformés par moulage ou réalisés par ajout de matière (ex : résine) dans lesdites réservations. Dans la mesure où la réservation 1013, 2013 entoure et enserre la tête 1031, 2031 dans les trois dimensions, on peut facilement obtenir un contrôle tridimensionnel : chaque zone de la tête peut être contrainte.

**Un mouvement d'ingression est obtenu en exerçant** une pression dans la zone I (figure 4a), **au niveau de l'extrémité** 10311 (proche de la face occlusale ou incisale de la dent), selon le grand axe de la dent. Cette pression va générer une force axiale de sens apical qui tend à enfoncer la dent dans son alvéole.

**A l'inverse, un mouvement d'égression** est obtenu en exerçant une pression dans **la zone E (****figure 4a****), au niveau de l'extrémité 10310 (proche de la racine la** dent), selon le grand axe de la dent. Cette pression va générer une force axiale de sens occlusal qui tend à faire sortir la dent de son alvéole.

Un mouvement de version (tipping) est obtenu en exerçant une pression dans la zone V11 et/ou dans la zone V12 (figure 4a). Cette pression va provoquer une rotation de la couronne dans un sens mésio-**distal autour d'un** axe de rotation vestibulo-lingual. Et une pression exercée dans la zone V21 et/ou dans la zone V22 va provoquer une rotation inverse de la couronne dans le sens disto-mésial **autour d'un axe vestibulo-lingual.**

Un mouvement de torque est obtenu en exerçant une pression dans la zone T11 et/ou dans la zone T12 (figure 4b). Cette pression va provoquer une rotation de la couronne dans le sens vestibulo-**lingual autour d'un axe** mésio-distal. Et une pression exercée dans la zone T21 et/ou dans la zone T22 va provoquer une rotation inverse de la couronne, dans le sens lingo-**vestibulaire autour d'un axe** mésio-distal.

Un mouvement de rotation est obtenu en exerçant une pression dans la zone R11 et/ou dans la zone R12 (figure 4c). Cette pression va provoquer une rotation de la dent autour de son grand axe, dans le sens disto-mésial. Et une pression exercée dans la zone R21 et/ou dans la zone R22 va provoquer une rotation de la dent dans le sens mésio-distal autour de son grand axe.

Un mouvement de translation est obtenu en exerçant une pression dans la zone L (figures 4b et 4c). Cette pression va provoquer une translation de la couronne dans le sens lingo-vestibulaire. Un mouvement de translation similaire est obtenu en exerçant simultanément une pression dans les zones R21 et R12 (en complément ou en substitution **d'une pression exercée** dans la zone L). Et une pression exercée simultanément dans les zones R11 et R22 va provoquer une translation inverse de la dent dans le sens vestibulo-lingual.

Ces différents mouvements peuvent être combinés en exerçant simultanément des pressions dans différentes zones de la tête 1031. Par exemple, on peut combiner un mouvement de translation et un mouvement de rotation en exerçant simultanément une pression dans les zones L, R11 et R12. **De même, on peut combiner un mouvement d'égression et** un mouvement de version en exerçant simultanément une pression dans les zones E et V11. **L'ensemble de ces différents mouvements dentaires peuvent en outre être amplifiés et/ou régler par des contraintes exercées par l'aligneur directement sur** la face linguale des dents. On obtient alors simultanément des zones de contraintes distinctes sur les connecteurs et sur la face linguale des dents.

La forme ovoïde ou ellipsoïde de la tête 1031, **combinée à l'orientation** spécifique de ladite tête, permettent de fournir une infinité de zones de contraintes (ou zones de poussée) qui vont aider à orienter avec précision les forces de traitement exercées par l'aligneur, pour provoquer un ou plusieurs mouvements dentaires voulus. Les localisations des zones de contraintes choisies **par le praticien permettent en outre de régler l'intensité des forces** de traitement exercées par l'aligneur. Les déplacements dentaires, selon les trois ordres, sont ainsi réglés et contrôlés avec une grande précision.

Un tel connecteur va permettre de transmettre avec précision à la dent, les forces de traitement **générées par l'aligneur. Le connecteur s'apparente à une** sorte de manette de commande ou joystick permettant de contrôler les mouvements de la dent sur lequel il est fixé. Selon une autre analogie, la tête de connexion est un avatar de la dent sur lequel le connecteur est fixé : les effets des contraintes appliquées sur la tête vont se répercuter directement sur la dent.

**Les connecteurs 103, 203 sont fixés sur plusieurs dents d'une arcade. Mais l'aligneur 101, 201 ne va pas nécessairement appliquer des contraintes de traitement sur l'ensemble de ces dents. En effet, seules certaines de ces dents nécessitent d'être repositi**onnées tandis que d'autres serviront d'ancrages pour maintenir **en place l'aligneur 101, 201 lorsqu'il** applique les contraintes contre la ou les dents à repositionner.

**Pour que l'aligneur 101, 201 puisse** exercer des contraintes de traitement avec une intensité suffisante sur les connecteurs 103, 203 sur lesquels il **s'emboîte et/ou sur les dents,** il doit prendre appui contre une surface (loi d'action-réaction). **Les surfaces en contact avec l'aligneur sont celles** des faces linguales 102b, 202b et celles des têtes de connexion 1031, 2031. Les **connecteurs 103, 203 permettent donc d'augmenter la surface de contact** globale. Toutefois, cette surface de contact globale est bien moindre que celle **d'un** aligneur classique du type gouttière Invisalign^{®} qui recouvre, en plus des faces linguales 102b, 202b, les faces occlusales, incisales et vestibulaires des dents. À **module d'élasticité équivalent, l'aligneur** 101, 201 **selon l'invention est donc** susceptible d'exercer des contraintes de traitement de moindre intensité sur les connecteurs 103, 203 et/ou sur les dents que des gouttières Invisalign^{®}. Cela peut être problématique selon la nature des mouvements dentaires à effectuer, par exemple des mouvements de translation ou de rotation.

Pour résoudre cette problématique, une solution consiste à utiliser un aligneur 101, 201 ayant un module d'élasticité augmenté, par exemple en utilisant un **matériau plus rigide et/ou en augmentant l'épaisseur desdits aligneurs. Cette solution présente toutefois l'inconvénient d'être** particulièrement douloureuse et inconfortable pour le patient **dans la mesure où l'intensité des contraintes peut** être relativement élevée localement.

**Aussi, une solution préférée consiste à conformer l'aligneur 101, 201 pour qu'il présente** une zone **d'**appui supplémentaire. **Cette zone d'appui supplémentaire joue le rôle d'un levier qui va augmenter l'intensité des contraintes exercées par l'aligneur 101, 201. Sur les** figures 1, 2a, 2b et 5, **l'aligneur 101 présente une extension palatine 1010 configurée pour,** en usage, venir en appui contre tout ou partie de la voute palatine VP du patient. Selon un **mode de réalisation, l'extension palatine 1010 s'étend au**-delà de la zone gingivale, par exemple sur 0,5 cm à 2 cm, pour recouvrir tout ou partie des crêtes palatines (largeur inter-canine par exemple). À **titre d'exemple,** la surface de l'extension palatine 1010 est comprise entre 1 cm² et 3 cm². De même, **l'aligneur** 201 présente une extension gingivale 2010 configurée pour, en usage, venir en appui contre une zone gingivale ZG du patient. Selon un mode de réalisation, **l'extension gingivale 1010 recouvre la zone gingivale sur** un arc dont la longueur est comprise entre 1 cm et 4 cm (ex : un arc inter-canine) et **jusqu'à la jonction** muco-gingivale. La surface de cette extension gingivale 2010 est par exemple comprise entre 0,5 cm² et 2 cm².

**Cette solution présente l'avantage de conserver un aligneur** 101, 201 relativement fin et souple, ne générant pas de contraintes excessives, et de fait particulièrement confortable pour le patient.

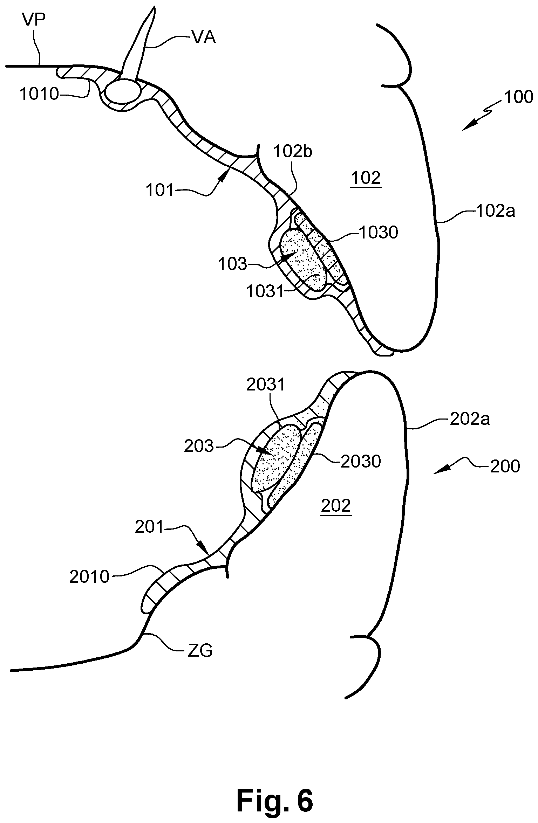

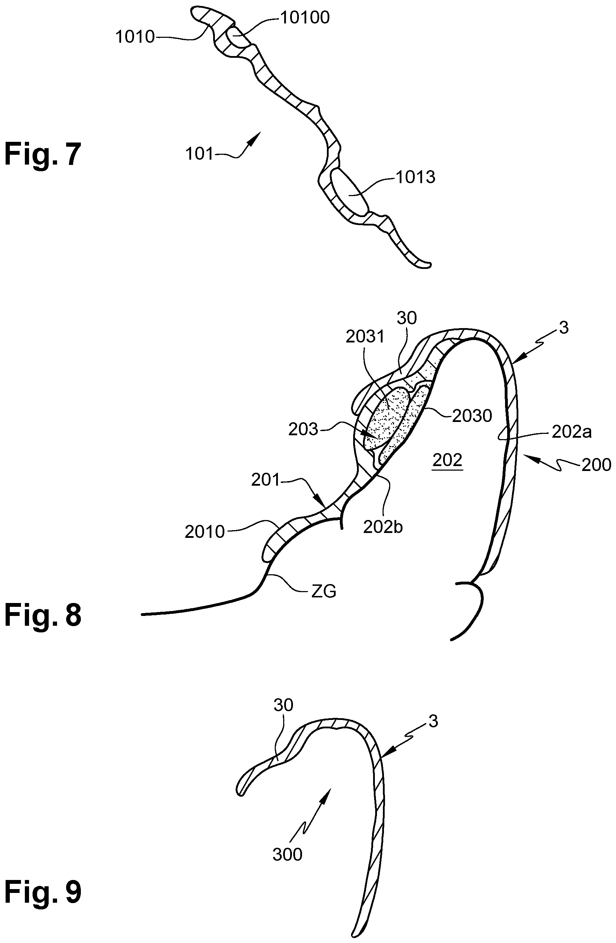

Selon un mode de réalisation illustré sur la figure 6, **l'extension palatine 1010** est en prise avec une **vis d'ancrage VA installé**e dans le palais du patient. **L'extension palatine 1010 présente à cet effet une réservation** 10100 (figure 7) dans la**quelle s'emboîte la tête de la vis VA. L'aligneur 101 bénéficie ainsi d'un point d'ancrage supplémentaire permettant d'augmenter encore davantage l'intensité des contraintes. Une configuration similaire peut être envisagée au niveau de l'**extension gingivale 2010.

Le **mode de réalisation illustré sur les** **figures 8 et 9****, permet d'amplifier** davantage la contrainte exercée par **l'aligneur** 201 sur les têtes de connexion 2031 et/ou sur les faces linguales 202b des dents à déplacer. Dans ce mode de réalisation, une gouttière 3 amovible est profilée pour recouvrir des dents du patient. Cette gouttière 3 présente une portion 30 qui **s'engage sur au moins une partie de l'aligneur** 201 de façon à appliquer sur ledit aligneur au moins une force tendant à le contraindre vers la face linguale 202b des dents 202 **qu'il** recouvre et qui doivent être déplacées. La gouttière 3 est avantageusement réalisée dans le **même matériau que l'aligneur 201, et présente la même épaisseur ou une** épaisseur sensiblement équivalente, **de sorte qu'e**lle est flexible. Cette gouttière **3 peut aussi bien être placée au niveau de l'arcade mandibulaire pour recouvrir l'aligneur** 201 **qu'au niveau de l'arcade maxillaire pour recouvrir l'aligneur** 101. La **gouttière 3 étant adaptée à la forme de l'aligneur 201, il** y a autant de gouttières **que d'aligneurs dans la séquence de traitement.**

À **l'instar d'une gouttière de type Invisalign^{®}, la gouttière 3 présente une** cavité de réception 300 qui s'adapte aux dents, par exemple à toutes les dents **de l'arcade dentaire** sur laquelle elle est positionnée. La gouttière 3 peut ainsi recouvrir la face vestibulaire 202a et la face occlusale/incisale de ces dents. Parmi ces dents, celles qui ne coopèrent pas avec **l'aligneur 201,** la gouttière 3 vient également recouvrir leur face linguale. Et pour celles qui coopèrent avec **l'aligneur 201,** la portion 30 vient recouvrir au moins une partie dudit aligneur. Sur **la** **figure 8****, la portion 30 vient recouvrir l'aligneur 201 jusqu'au connecteur 203. Elle pourrait toutefois s'étendre au-delà, jusqu'au niveau de la gencive. De par la flexibilité de la gouttière 3, la portion 30 agit comme une pince sur l'aligneur 201,** ce qui va amplifier la contrainte exercée sur les têtes de connexion 2031 et/ou sur les faces linguales 202b des dents à déplacer.

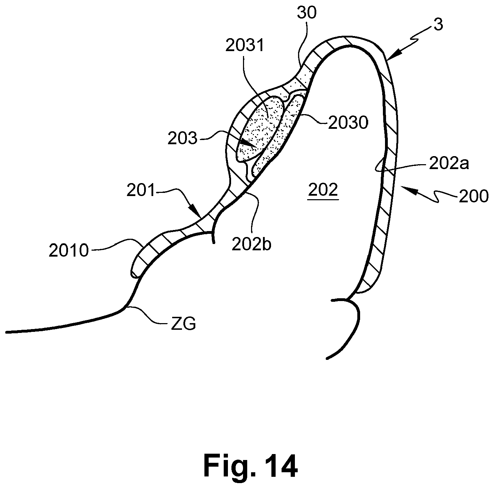

**Sur la** **figure 14****, la portion 30 ne vient pas recouvrir l'aligneur 201 mais est** complémentaire de ce dernier. Ainsi, les dents avec lesquelles coopèrent l'aligneur 201 ont : - la majeure partie (par exemple entre 80% et 95%) de leur face linguale recouverte par ledit aligneur ; - et **l'autre partie de** leur face linguale, leur face occlusale/incisale et leur face vestibulaire recouvertes par la gouttière 3. La portion 30 peut venir recouvrir une petite partie de la face linguale, formant un retour lin**gual qui s'étend sur quelques millimètres (par exemple de 1 mm à 5** mm) du bord occlusal/incisal de la dent. La gouttière 3 agit ainsi sur les dents (en leur appliquant une contrainte depuis la face vestibulaire) **mais pas sur l'aligneur** 201. Cette conception est particulièrement avantageuse **d'un point de vue fabrication. En effet, il suffit de concevoir l'aligneur 201 et la gouttière 3 en une** seule pièce monobloc (par exemple par thermoformage) et de découper ensuite ledit aligneur (par exemple par découpe laser) pour le désolidariser de ladite gouttière. Ces deux éléments sont ainsi obtenus très simplement et à moindres coûts.

**Il est à noter que cette gouttière 3 n'est absolument pas essentielle, dans la mesure où l'aligneur lingual 101, 201 donne de très bons résultats lorsqu'il est utilisé seul. La gouttière 3 n'est qu'un simple accessoire, qui est essentiellement** utilisé la nuit. Elle peut également être utilisée de manière passive (sans **contraindre l'aligneur et/ou les dents), comme accessoire de content**ion en fin de traitement.

**Des appareils orthodontiques tels que des disjoncteurs ou des quad'hélix** sont couramment utilisés pour agrandir une mâchoire trop étroite. La force exercée **par ces appareils permet au palais de s'élargir pour que toutes les dents** évoluent correctement. Ces appareils sont généralement contraignants dans la mesure où leur mise en place peut être relativement complexe. Et dans le cas **d'un quad'hélix, l'activation et le réglage sont réalisés par le praticien à chaque** visite. Seul le **praticien peut modifier l'appareil, ce qui est particulièrement** contraignant. Un appareil dentaire selon un mode de réalisation non couvert par la présente invention, permet de résoudre ces problèmes.

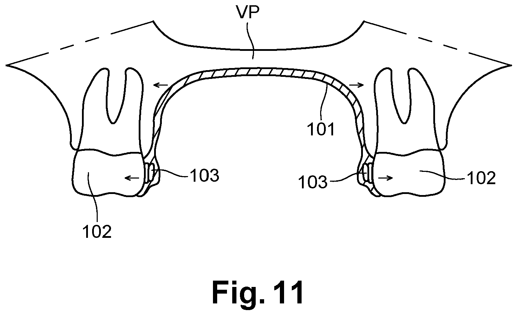

Sur les figures 10 et 11, les connecteurs 103 sont fixés sur la face linguale des molaires et prémolaires **de manière à s'assurer** que **la tenue aux dents est** optimale. Ils peuvent toutefois être fixés uniquement sur les molaires ou sur **d'autres dents.**

L'aligneur se présente maintenant **sous la forme d'une plaque palatine** 101 qui recouvre le palais et **qui s'engage de manière démontable** (manuellement et sans instrument) sur les connecteurs 103 comme expliqué précédemment. La **plaque 101 n'a plus pour fonction d'aligner les dents, mais d'élargir le palais (plaque d'expansion** maxillaire). En effet, les connecteurs 103 et la plaque 101 coopèrent de façon à appliquer au moins une contrainte sur les dents qui tend à écarter le palais dans un sens transversal.

**Similaire à l'aligneur décrit précédemment,** la plaque 101 est une plaque flexible profilée pour recouvrir la seule face linguale 102b, 202b des dents en laissant libres les autres faces desdites dents. Elle recouvre également la voute palatine VP. La plaque 101 comprend des réservations dans lesquelles **s'emboîtent de manière élastique les connecteurs** 103.

En se rapportant à la figure 9, la plaque flexible 101 appui sur la voute palatine VP et agit comme un ressort ou un vérin. La force (schématisée par les flèches) exercée par la plaque flexible 101 sur la voute palatine VP et sur les connecteurs 103 et les dents 102 est orientée le sens lingo-vestibulaire, ce qui permet un écartement du palais.

Selon un mode de réalisation, la plaque flexible 101 est en appui contre la face linguale de plusieurs dents **d'un quadrant ou demie**-arcade. Et **éventuellement des dents qui ne sont pas pourvues d'un connecteur 103, comme** par exemple les incisives et les canines sur la figure 10. Il en résulte que la plaque flexible 101 permet un écartement du palais dans une direction transversale et en même temps dans une direction sagittale, c'est-à-dire un écartement courbe ou en éventail. Cela est particulièrement avantageux lorsque **l'appareil est por**té par un enfant en période de croissance dont la croissance normale du maxillaire s'effectue dans toutes les directions et pas seulement dans la direction transversale. Si seul un écartement du palais dans une direction transversale est souhaité, la plaque flexible 101 peut être configurée pour ne contraindre que les molaires.

**La plaque 101 s'emboîtant et se démontant facilement et manuellement des** connecteurs 103, le patient peut gérer seul son traitement. Mis à part la mise en place des connecteurs 103, **le praticien n'a pas besoin d'intervenir.** Le patient **dispose d'une série de plaque 101 permettant, à** chaque étape, **d'écarter** progressivement le palais, par exemple de 0,1 mm à 0,2 mm. Chaque plaque est de plus en plus large pour élargir le palais. Il peut y avoir entre 10 et 100 étapes et donc entre 10 et 100 modèles différents de plaque 101. Au début de chaque étape, lorsqu'il est placé sur le palais et engagé dans les connecteurs, la plaque 101 est ajustée à la configuration intermédiaire (ou finale) que **l'arcade maxillaire** doit avoir à la fin de ladite étape, de sorte que chaque modèle de plaque 101 exerce des contraintes sur les dents qui tendent à élargir le palais. La flexibilité de la plaque 101 lui permet de se déformer élastiquement jusqu'à la configuration **que l'arcade a au début l'étape du traitement. En essayant de revenir à sa forme** initiale (mémoire de forme), la plaque 101 exerce des contraintes sur **l'arcade** maxillaire. **L'arcade maxillaire et le palais** s'ajustent alors progressivement à la forme de la plaque 101. Lorsque **l'arcade maxillaire et le palais sont parfaitement ajustés à la forme d'**une plaque 101, celle-ci est changée **pour passer à l'étape** suivante du traitement. Le traitement peut durer de 1 à 6 mois et les plaques 101 changées 1 ou 2 fois par mois.

Les implants dentaires ou ancrages dentaires sont utilisés pour remplacer des dents manquantes. Un implant comprend généralement une vis (en titane, zircone ou polymère) **insérée dans l'os du maxillaire ou de la mandibule et** destinée à créer un ancrage capable de recevoir une prothèse dentaire. La mise **en place de l'implant** est réalisée en plusieurs étapes et se déroule généralement sous anesthésie. Durant une étape de chirurgie principale, le praticien met l'implant en place **en le vissant dans l'os.** Pendant une période de cicatrisation de plusieurs **mois, l'os se reforme autour de l'implant et l'enserre.** Une fois l'implant ancré à l'os, un pilier est mis en place pour préparer l'évasement gingival qui servira de support à la prothèse. La prothèse est enfin mise en place sur le pilier et scellée de façon définitive.

Tant que la prothèse dentaire **n'est pas installée sur le** pilier, le patient se retrouve avec un espace vide dans **l'arcade dentaire, au niveau** du site **d'implantation.** Cet espace vide peut être particulièrement inesthétique et provoquer la migration indésirable **d'autres dents.** Des malocclusions dentaires, diastèmes ou trémas peuvent alors apparaître et perturber la fonction musculaire des mâchoires ou les relations fonctionnelles entre les dents. Un appareil dentaire selon un mode de réalisation non couvert par la présente invention, permet de résoudre ces problèmes.

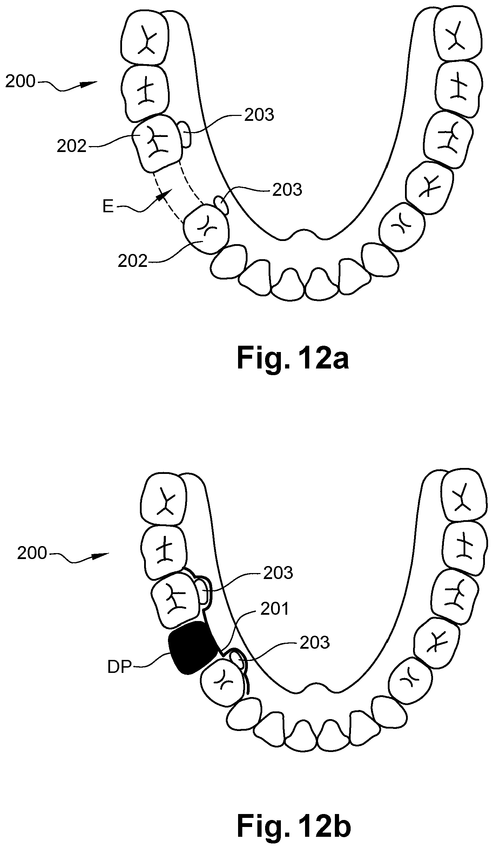

Sur la figure 12a, des connecteurs 203 sont fixés sur la face linguale des dents 202 **qui encadrent l'espace E laissé libre au niveau du site d'implantation.** À **titre d'exemple, si l'implant en mit** en place au niveau de deuxième prémolaire, les connecteurs 203 sont fixés sur la face linguale de la première prémolaire et de la première molaire.

**En se rapportant à la** **figure 12b****, l'aligneur se présente maintenant sous la forme d'une bande support 201 sur laquelle est fixée une** prothèse dentaire DP. De manière classique, cette prothèse est réalisée en résine et/ou en céramique. Elle est obtenue par moulage, usinage ou impression 3D.

La fixation de la prothèse DP sur la bande support 201 peut être réalisée par **collage, soudage, emboîtage, ou toute autre méthode convenant à l'homme** du métier. Selon le mode de réalisation de la figure 12b, la face linguale de la prothèse DP est collée sur la bande support 201. Selon une variante de réalisation, la prothèse DP et la bande support 201 sont une seule et même pièce unitaire obtenue par moulage, usinage ou impression 3D.

Comme pour **l'aligneur décrit précédemment, la bande support 201 s'engage** sur les connecteurs 203. **Elle se présente sous la forme d'une plaque flexible ou** rigide, profilée pour recouvrir la seule face linguale des dents en laissant libres les autres faces desdites dents. Elle comprend des réservations dans lesquelles **s'emboîtent de manière élastique les connecteurs 203.**

Lorsque la bande support 201 est emboîtée sur les connecteurs 203, la prothèse DP **vient combler l'espace E. La bande 201 n'a plus pour fonction d'aligner les dents, mais de supporter la prothèse DP. Elle permet** également **d'éviter que les dents se déplacent et maintient l'espace E en vue de la future** implantation. La bande support 201 se retrouvant cachée derrière les dents et la prothèse DP, cette solution est particulièrement esthétique. En outre, la bande **support 201 s'engageant de manière démontable (manuellement et sans** instrument) sur les connecteurs 203, la mise en place et le retrait de la prothèse DP se font très facilement. La prothèse DP peut être simplement provisoire et être notamment retirée dès la fin de la période de cicatrisation, au moment de la mise en place du pilier et de la prothèse définitive. La prothèse DP peut également être maintenu en place sur une plus longue durée, et faire office de prothèse définitive (à moindre coût), par exemple dans le cas où le patient ne souhaite pas poursuivre **l'opération après la mise en place de** l'implant.

**L'agencement des différents éléments et/ou moyens et/ou étapes de l'invention, dans les modes de réalisation décrits** ci-dessus, ne doit pas être compris comme exigeant un tel agencement dans toutes les implémentations. **D'autres variantes peuvent** être prévues.

En outre, une ou plusieurs caractéristiques exposées seulement dans un mode de réalisation peuvent être combinées avec une ou plusieurs autres caractéristiques exposées seulement dans un autre mode de réalisation. De même, une ou plusieurs caractéristiques exposées seulement dans un mode de réalisation peuvent être généralisées aux autres modes de réalisation, même si **ce ou ces caractéristiques sont décrites seulement en combinaison avec d'autres** caractéristiques.

## Revendications

1. Appareil dentaire amovible comprenant :
- un aligneur dentaire (101, 201) configuré pour coopérer avec au moins une dent (102, 202) d'une arcade dentaire (100, 200) d'un patient de manière à la déplacer vers une position souhaitée,
- des connecteurs (103, 203) adaptés pour se fixer sur des dents de l'arcade dentaire (100, 200) et sur lesquels s'engage de manière démontable l'aligneur dentaire (101, 201),
o les connecteurs et l'aligneur coopèrent de façon à appliquer au moins une contrainte de traitement sur au moins ladite dent lorsque l'appareil dentaire est porté par le patient,
**se caractérisant par le fait que** :
- l'aligneur dentaire (101, 201) est formé d'une bande flexible profilée pour recouvrir la seule face linguale (102b, 202b) des dents en laissant libre les autres faces desdites dents,
- les connecteurs (103, 203) sont configurés pour se fixer contre la face linguale (102b, 202b) des dents,
- des réservations (1013, 2013) dans lesquelles s'emboîtent de manière élastique les connecteurs (103, 203) sont conformées dans la bande flexible de sorte que lesdites réservations et ladite bande ne présentent pas de mouvement relatif entre eux,
- lorsque les réservations (1013, 2013) sont emboîtées dans les connecteurs (103, 203) et que la bande flexible est en position, la flexibilité de ladite bande permet à ladite bande d'exercer une ou plusieurs contraintes sur lesdits connecteurs,
- les réservations (1013, 2013) et les connecteurs (103, 203) sont configurés pour que la force permettant de retirer l'aligneur desdits connecteurs soit inférieure à 550 g, de sorte que lesdits connecteurs s'emboîtent de manière démontable manuellement desdites réservations.

2. Appareil selon l'une des revendications précédentes, dans lequel chaque connecteur (103, 203) comporte :
- une embase (1030, 2030) présentant une face de fixation (1030b) adaptée pour se fixer contre la face linguale (102b, 202b) d'une dent,
- une tête de connexion (1031, 2031) dans le prolongement de l'embase (1030, 2030) et dans laquelle s'emboîte une des réservations (1013, 2013) de l'aligneur dentaire (101, 201).

3. Appareil selon la revendication 2, dans lequel :
- la tête de connexion (1031, 2031) a une forme d'ovoïde ou d'ellipsoïde présentant un axe de symétrie longitudinal (X-X),
- l'axe de symétrie longitudinal (X-X) et la normale à la face de fixation de l'embase, forment un angle (α) compris entre 10° et 90°, avantageusement entre 45° et 90° et préférentiellement entre 55° et 65°.

4. Appareil selon l'une des revendications 2 ou 3, dans lequel la tête de connexion (1031, 2031) en forme d'ovoïde présente une première extrémité (10310) et une seconde extrémité (10311) opposées, ladite première extrémité étant plus aiguë que ladite seconde extrémité, laquelle première extrémité est, en usage, dirigée vers la racine de la dent sur laquelle le connecteur (103) est fixé.

5. Appareil selon l'une des revendications 2 à 4, dans lequel la tête de connexion (1301) est distante de l'embase (1030), une collerette (1032) reliant ladite embase de ladite tête.

6. Appareil selon la revendication 1, dans lequel chaque connecteur (103, 203) comporte :
- une tête de connexion (1031, 2031) dans laquelle s'emboîte une des réservations de l'aligneur,
- une face de fixation (1030b) adaptée pour se fixer contre la face linguale (102b, 202b) d'une dent,
o la face de fixation (1030b) consiste en un méplat aménagé sur la tête de connexion (1031, 2031).

7. Appareil selon l'une des revendications précédentes, dans lequel l'aligneur (101) présente une extension palatine (1010) configurée pour, en usage, venir en appui contre tout ou partie de la voute palatine (VP) du patient lorsque ledit aligneur est positionné au niveau de l'arcade dentaire maxillaire (100) dudit patient.

8. Appareil selon l'une des revendications précédentes, dans lequel l'aligneur (201) présente une extension gingivale (2010) configurée pour, en usage, venir en appui contre une zone gingivale (GV) du patient lorsque ledit aligneur est positionné au niveau de l'arcade dentaire mandibulaire (200) dudit patient.

9. Appareil selon l'une des revendications précédentes, comportant en outre une gouttière (3) flexible et amovible, profilée pour, en usage, recouvrir des dents du patient, laquelle gouttière présente une portion (30) s'engageant sur au moins une partie de l'aligneur (201) de façon à appliquer sur ledit aligneur au moins une force tendant à le contraindre vers la face linguale (202b) des dents à déplacer.

10. Appareil selon l'une des revendications 1 à 8, comportant en outre une gouttière (3) flexible et amovible, profilée pour, en usage, recouvrir des dents du patient, laquelle gouttière présente une portion (30) complémentaire de l'aligneur (201) de sorte que, en usage, les dents avec lesquelles coopèrent ledit aligneur aient :
- la majeure partie de leur face linguale recouverte par ledit aligneur,
- l'autre partie de leur face linguale, leur face occlusale/incisale et leur face vestibulaire recouvertes par ladite gouttière.

11. Appareil selon l'une des revendications précédentes, dans lequel l'aligneur (101, 201) est réalisé dans un matériau présentant un module d'élasticité longitudinale inférieur à 1000MPa selon la norme DIN EN ISO 527-2.

12. Appareil selon l'une des revendications 1 à 11, dans lequel l'aligneur (101, 201) est en polyuréthane thermoformable.

13. Appareil selon l'une des revendications 1 à 11, dans lequel l'aligneur (101, 201) présente des portions ou zones présentant des modules d'élasticité distincts.

## Patentansprüche

1. Abnehmbare Zahnprothese, umfassend:
- einen Zahnausrichter (101, 201), der so eingerichtet ist, dass er mit mindestens einem Zahn (102, 202) eines Zahnbogens (100, 200) eines Patienten zusammenwirkt, um ihn in eine gewünschte Position zu bewegen,
- Verbinder (103, 203), die zum Befestigen an Zähnen des Zahnbogens (100, 200) geeignet sind und an denen der Zahnausrichter (101, 201) demontierbar eingerastet wird,
o die Verbinder und der Ausrichter so zusammenwirken, dass mindestens eine Behandlungsbelastung auf mindestens diesen Zahn ausgeübt wird, wenn die Zahnprothese von dem Patienten getragen wird,
**dadurch gekennzeichnet, dass:**
- der Zahnausrichter (101, 201) aus einem profilierten flexiblen Profilband gebildet ist, um die einzige linguale Seite (102b, 202b) der Zähne abzudecken, wobei die anderen Seiten der Zähne frei bleiben,
- die Verbinder (103, 203) so eingerichtet sind, dass sie an der lingualen Seite (102b, 202b) der Zähne befestigt werden,
- Aussparungen (1013, 2013), in die die Verbinder (103, 203) elastisch eingreifen, im flexiblen Band so ausgebildet sind, dass die Aussparungen und das flexible Band keine relative Bewegung untereinander aufweisen,
- wenn die Aussparungen (1013, 2013) in die Verbinder (103, 203) eingreifen und das flexible Band in Position ist, ermöglicht die Flexibilität des Bands, dass das Band eine oder mehrere Spannungen auf die Verbinder ausübt,
- die Aussparungen (1013, 2013) und die Verbinder (103, 203) so eingerichtet sind, dass die Kraft zum Entfernen des Ausrichters aus den Verbindern weniger als 550 g beträgt, so dass die Verbinder von Hand demontierbar in die Aussparungen eingreifen.

2. Prothese nach einem der vorhergehenden Ansprüche, wobei jeder Verbinder (103, 203) Folgendes umfasst:
- eine Basis (1030, 2030) mit einer Befestigungsfläche (1030b), die geeignet ist, sich an der lingualen Seite (102b, 202b) eines Zahns zu befestigen,
- einen Verbindungskopf (1031, 2031) in der Verlängerung der Basis (1030, 2030) und in den eine der Aussparungen (1013, 2013) des Zahnausrichters (101, 201) eingreift.

3. Prothese nach Anspruch 2, wobei:
- der Verbindungskopf (1031, 2031) eine Ei- oder Ellipsoidform aufweist, die eine Längssymmetrieachse (X-X) aufweist,
- die Längssymmetrieachse (X-X) und die Normale zur Befestigungsfläche der Basis bilden einen Winkel (α) zwischen 10° und 90°, günstigerweise zwischen 45° und 90° und vorzugsweise zwischen 55° und 65°.

4. Prothese nach einem der Ansprüche 2 oder 3, wobei der Verbindungskopf (1031, 2031) in Eiform ein gegenüberliegendes erstes Ende (10310) und ein zweites Ende (10311) aufweist, wobei das erste Ende spitzer ist als das zweite Ende, wobei das erste Ende im Gebrauch zur Wurzel des Zahns gerichtet ist, an dem der Verbinder (103) befestigt ist.

5. Prothese nach einem der Ansprüche 2 bis 4, wobei der Verbindungskopf (1301) von der Basis (1030) entfernt ist, wobei ein Flansch (1032) die Basis mit dem Kopf verbindet.

6. Prothese nach Anspruch 1, wobei jeder Verbinder (103, 203) Folgendes umfasst:
- einen Verbindungskopf (1031, 2031), in den eine der Aussparungen des Ausrichters eingreift,
- eine Befestigungsfläche (1030b), die geeignet ist, sich an der lingualen Seite (102b, 202b) eines Zahns zu befestigen,
o die Befestigungsfläche (1030b) besteht aus einer Abflachung, die auf dem Verbindungskopf (1031, 2031) angeordnet ist.

7. Prothese nach einem der vorhergehenden Ansprüche, wobei der Ausrichter (101) eine Gaumenerweiterung (1010) aufweist, die so konfiguriert ist, dass sie im Gebrauch den gesamten oder einen Teil des Gaumengewölbes (VP) des Patienten abstützt, wenn der Ausrichter auf Höhe des maxillären Zahnbogens (100) des Patienten positioniert ist.

8. Prothese nach einem der vorhergehenden Ansprüche, wobei der Ausrichter (201) eine Gingivaerweiterung (2010) besitzt, die so eingerichtet ist, dass sie im Gebrauch gegen einen Gingivabereich (GV) des Patienten stützt, wenn der Ausrichter auf Höhe des mandibularen Zahnbogens (200) des Patienten positioniert ist.

9. Prothese nach einem der vorhergehenden Ansprüche, ferner mit einer flexiblen und abnehmbaren Schiene (3), die so profiliert ist, dass sie im Gebrauch die Zähne des Patienten abdeckt, wobei die Schiene einen Abschnitt (30) aufweist, der in mindestens einen Teil des Ausrichters (201) eingreift, um auf den Ausrichter mindestens eine Kraft auszuüben, die dazu tendiert, ihn in Richtung der lingualen Seite (202b) der zu verschiebenden Zähne zu zwängen.

10. Prothese nach einem der Ansprüche 1 bis 8, die ferner eine flexible und abnehmbare Schiene (3) umfasst, die so profiliert ist, dass sie bei Gebrauch die Zähne des Patienten bedeckt, wobei die Schiene einen Abschnitt (30) aufweist, der komplementär zu dem Ausrichter (201) ist, so dass bei Gebrauch die Zähne, mit denen der Ausrichter zusammenwirkt, Folgendes aufweisen:
- den größten Teil ihrer lingualen Seite, der von dem Ausrichter bedeckt ist,
- den anderen Teil ihrer lingualen Seite, ihre okklusale/inzisale Seite und ihre vestibuläre Seite, die von der Schiene bedeckt sind.

11. Prothese nach einem der vorhergehenden Ansprüche, wobei der Ausrichter (101, 201) aus einem Material mit einem Längselastizitätsmodul von weniger als 1000MPa nach der Norm DIN EN ISO 527-2 hergestellt wird.

12. Prothese nach einem der Ansprüche 1 bis 11, wobei der Ausrichter (101, 201) aus thermoformbarem Polyurethan besteht.

13. Prothese nach einem der Ansprüche 1 bis 11, wobei der Ausrichter (101, 201) Abschnitte oder Bereiche mit unterschiedlichen Elastizitätsmodulen aufweist.

## Claims

1. A removable dental appliance comprising:
- a teeth aligner (101, 201) configured to cooperate with at least one tooth (102, 202) of a dental arch (100, 200) of a patient so as to move it to a desired position,
- connectors (103, 203) adapted to be attached to teeth of the dental arch (100, 200) and on which the teeth aligner (101, 201) is dismountably engaged,
o the connectors and the aligner cooperate so as to apply at least one treatment stress to at least said tooth when the dental appliance is worn by the patient,
**characterised in that:**
- the teeth aligner (101, 201) is formed of a flexible strip profiled to cover only the lingual surface (102b, 202b) of the teeth leaving the other surfaces of said teeth free,
- the connectors (103, 203) are configured to be attached against the lingual surface (102b, 202b) of the teeth,
- recesses (1013, 2013) into which the connectors (103, 203) elastically fit are shaped in the flexible strip so that said recesses and said strip do not have any relative movement between them,
- when the recesses (1013, 2013) are fitted into the connectors (103, 203) and the flexible strip is in position, the flexibility of said strip allows said strip to exert one or more stresses on said connectors,
- the recesses (1013, 2013) and the connectors (103, 203) are configured so that the force allowing the aligner to be removed from said connectors is less than 550 g, so that said connectors can be manually dismountably fitted into said recesses.

2. The appliance according to any of the preceding claims, wherein each connector (103, 203) includes:
- a base (1030, 2030) having an attachment face (1030b) adapted to be attached against the lingual surface (102b, 202b) of a tooth,
- a connection head (1031, 2031) as an extension of the base (1030, 2030) and into which one of the recesses (1013, 2013) of the teeth aligner (101, 201) fits.

3. The appliance according to claim 2, wherein:
- the connection head (1031, 2031) has an ovoid or ellipsoid shape having a longitudinal axis of symmetry (X-X),
- the longitudinal axis of symmetry (X-X) and the normal to the attachment face of the base, form an angle (α) between 10° and 90°, advantageously between 45° and 90°, and preferably between 55° and 65°.

4. The appliance according to any of claims 2 or 3, wherein the ovoid-shaped connection head (1031, 2031) has a first end (10310) and a second end (10311) opposite to each other, said first end being sharper than said second end, which first end is, in use, directed towards the root of the tooth to which the connector (103) is attached.

5. The appliance according to any of claims 2 to 4, wherein the connection head (1301) is distant from the base (1030), a flange (1032) connecting said base of said head.

6. The appliance according to claim 1, wherein each connector (103, 203) includes:
- a connection head (1031, 2031) into which one of the recesses of the aligner fits,
- an attachment face (1030b) adapted to be attached against the lingual surface (102b, 202b) of a tooth,
o the attachment face (1030b) consists of a land arranged on the connection head (1031, 2031).

7. The appliance according to any of the preceding claims, wherein the aligner (101) has a palatal extension (1010) configured to, in use, bear against all or part of the palatal vault (VP) of the patient when said aligner is positioned at the maxillary dental arch (100) of said patient.

8. The appliance according to any of the preceding claims, wherein the aligner (201) has a gingival extension (2010) configured to, in use, bear against a gingival area (GV) of the patient when said aligner is positioned at the mandibular dental arch (200) of said patient.

9. The appliance according to one of the preceding claims, further comprising a flexible and removable gutter (3) profiled to, in use, cover the patient's teeth, which gutter has a portion (30) engaging on at least one part of the aligner (201) so as to apply to said aligner at least one force tending to force it towards the lingual surface (202b) of the teeth to be moved.

10. The appliance according to any of claims 1 to 8, further comprising a flexible and removable gutter (3) profiled to, in use, cover the patient's teeth, which gutter has a portion (30) complementary to the aligner (201) such that, in use, the teeth with which said aligner cooperates have:
- the biggest part of their lingual surface covered with said aligner,
- the other part of their lingual surface, their occlusal/incisal surface and their vestibular surface covered with said gutter.

11. The appliance according to one of the preceding claims, wherein the aligner (101, 201) is made of a material having a longitudinal modulus of elasticity of less than 1000MPa according to the standard DIN EN ISO 527-2.

12. The appliance according to any of claims 1 to 11, wherein the aligner (101, 201) is of thermoformable polyurethane.

13. The appliance according to any of claims 1 to 11, wherein the aligner (101, 201) has portions or zones having distinct modules of elasticity.
